(19) **Europäisches Patentamt / European Patent Office / Office européen des brevets**

(11) **EP 3 433 061 B1**

(12) **EUROPEAN PATENT SPECIFICATION**

(45) Date of publication and mention of the grant of the patent:
**13.03.2024 Bulletin 2024/11**

(21) Application number: **17719918.9**

(22) Date of filing: **21.03.2017**

(51) International Patent Classification (IPC):
**B25J 9/16** (2006.01)

(52) Cooperative Patent Classification (CPC):
**B25J 9/1692; G05B 2219/37423;**
**G05B 2219/39015; G05B 2219/39026;**
**G05B 2219/39054; G05B 2219/40545**

(86) International application number:
**PCT/IB2017/051626**

(87) International publication number:
**WO 2017/163177 (28.09.2017 Gazette 2017/39)**

(54) **AUTOMATIC CALIBRATION METHOD FOR ROBOT SYSTEM AND CORRESPONDING ROBOT SYSTEM**

AUTOMATISCHES KALIBRIERVERFAHREN FÜR EIN ROBOTERSYSTEM UND ENTSPRECHENDES ROBOTERSYSTEM

PROCÉDÉ D'ÉTALONNAGE AUTOMATIQUE POUR SYSTÈME DE ROBOT ET SYSTÈME DE ROBOT CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2016 CN 201610163828**

(43) Date of publication of application:
**30.01.2019 Bulletin 2019/05**

(73) Proprietors:
- **Tyco Electronics (Shanghai) Co., Ltd.**
  **China (Shanghai) Pilot Free Trade Zone**
  **Shanghai (CN)**
- **TE Connectivity Corporation**
  **Berwyn, PA 19312 (US)**

(72) Inventors:
- **DENG, Yingcong**
  **Shanghai (CN)**

- **ZHANG, Dandan**
  **Shanghai (CN)**
- **LU, Roberto Francisco-Yi**
  **Shanghai (CN)**
- **LIU, Yun**
  **Shanghai (CN)**
- **HU, Lvhai**
  **Shanghai (CN)**

(74) Representative: **Grünecker Patent- und Rechtsanwälte**
**PartG mbB**
**Leopoldstraße 4**
**80802 München (DE)**

(56) References cited:
**EP-A1- 2 390 622          WO-A1-2015/121767**
**WO-A2-03/035333          US-A1- 2005 225 278**
**US-A1- 2005 234 671          US-B1- 6 434 449**

## Description

## CROSS-REFERENCE TO RELATED APPLICATION

This application claims the benefit of Chinese Patent Application No.CN201610163828.8 filed on March 28, 2016 in the State Intellectual Property Office of China.

## BACKGROUND OF THE INVENTION

### Field of the Invention

Embodiments of the present invention relates to an automatic calibration method for a robot system.

### Description of the Related Art

In prior art, a calibration for a robot system, generally, is performed by an artificial teaching method. For example, an operator manually controls a robot to move an terminate execution tool (or referred as a terminate effector) mounted on a flange of the robot to reach the same one target point with a plurality of different poses, for a 6-axis robot, generally with four or more different poses. However, in the above method, it is necessary to determine whether the terminate execution tool is moved to the same target point by eyes of the operator. Thereby, an error is unavoidable in the artificial teaching method, and it causes a transformation matrix of the center of the terminate execution tool with respect to the center of the flange of the robot inaccurate. Furthermore, it is just very time-consuming to manually control the robot to reach the same target point with different poses and determine whether or not the robot reaches the same target point by eyes, greatly decreasing the work efficiency. Moreover, in a case where it needs to frequently replace the terminate execution tool in the robot system, the robot system must be re-calibrated after every time when the terminate execution tool is replaced with a new terminate execution tool, it is very troublesome and time-consuming.

In prior art, as exemplified by document WO 2015/121767 A1, there is also provided an automatic calibration method for a robot system based on a calibrated vision sensor. In the automatic calibration method, the robot is controlled to move the center of the terminate execution tool mounted on the flange of the robot to the same one target point in various different poses. The automatic calibration method greatly saves time and effort compared with the method of judging whether the terminate execution tool is moved to the target point by eyes. However, in the above automatic calibration method, it is necessary to identify the center of the terminate execution tool by means of the vision sensor. Generally, the terminate execution tool has a very complex geometric structure, and it is difficult to identify the center of the terminate execution tool. Especially, in a case where it needs to frequently replace the terminate execution tool, it needs to re-identify the center of the terminate execution tool after every time when the terminate execution tool is replaced with a new terminate execution tool, it is very troublesome and time-consuming.

In addition, in prior art, the vision sensor generally is a camera. Thereby, it needs to identify the center of the terminate execution tool based on images captured by the vision sensor. However, the amount of calculation to identify the center of the terminate execution tool based on images captured by the vision sensor is very large, decreasing the identifying speed, and seriously reducing the calibration efficiency of robot system.

Document WO 03/035333 A2 discloses a robot calibration method in which the tool centre point (TCP) position is calibrated, wherein a reference sphere is mounted on the robot in such a way that the centre of the sphere corresponds to the TCP, wherein the sphere is brought to different positions located within the range of at least three distance sensors and wherein the centre of such sphere is determined using the measurements obtained from said distance sensors.

## SUMMARY OF THE INVENTION

The present invention has been made to overcome or alleviate at least one aspect of the above mentioned disadvantages.

According to an object of the present invention, there is provided an automatic calibration method for a robot system to achieve the calibration of the robot system in a high precision and a high efficiency.

According to the present invention, there is provided an automatic calibration method of a robot system according to claim 1 and a corresponding robot system according to claim 11.

According to another exemplary embodiment of the present invention, an axis of the first distance sensor, an axis of the second distance sensor, and an axis of the third distance sensor intersect at the same one intersection point.

According to another exemplary embodiment of the present invention, the intersection point of the axis of the first distance sensor, the axis of the second distance sensor, and the axis of the third distance sensor is defined as the target point.

According to another exemplary embodiment of the present invention, the axis of the first distance sensor, the axis of the second distance sensor, and the axis of the third distance sensor are orthogonal to each other.

According to another exemplary embodiment of the present invention, three axes of a sensor coordinate system are defined by the axis of the first distance sensor, the axis of the second distance sensor, and the axis of the third distance sensor, respectively An original point of the sensor coordinate system is positioned at the intersection point of the axis of the first distance sensor, the axis of the second distance sensor, and the axis of the third distance sensor.

According to an exemplary embodiment of the present invention, in the step S400, the robot is controlled to accurately move the center of the sphere to the target point in at least two different poses.

According to another exemplary embodiment of the present invention, the step S400 comprises steps of:

S410: controlling the robot to move the center of the sphere to the target point in a first pose based on the three actual distances sensed by the three distance sensors, and obtaining a first pose data of the robot at the target point;

S420: controlling the robot to move the center of the sphere to the target point in a second pose based on the three actual distances sensed by the three distance sensors, and obtaining a second pose data of the robot at the target point;

S430: controlling the robot to move the center of the sphere to the target point in a third pose based on the three actual distances sensed by the three distance sensors, and obtaining a third pose data of the robot at the target point;

S440: controlling the robot to move the center of the sphere to the target point in a fourth pose based on the three actual distances sensed by the three distance sensors, and obtaining a fourth pose data of the robot at the target point; and

S450: calculating the transformation matrix Ts of the center of the sphere with respect to the center of the flange based on the obtained first pose data, second pose data, third pose data and fourth pose data of the robot.

In each of the steps S410, S420, S430 and S440, based on a first distance error between a first actual distance sensed by the first distance sensors and the first predetermined distance, a second distance error between a second actual distance sensed by the second distance sensors and the second predetermined distance and a third distance error between a third actual distance sensed by the third distance sensors and the third predetermined distance, performing a closed-loop feedback control on the robot until the first distance error, the second distance error and the third distance error all become zero.

According to another exemplary embodiment of the present invention, the robot comprises a multi axis robot.

According to another exemplary embodiment of the present invention, the three distance sensors each is a non-contact distance sensor.

According to another exemplary embodiment of the present invention, the three distance sensors each comprises a laser distance sensor or an ultrasonic distance sensor.

In the above various exemplary embodiments of the present invention, the robot may move the center of the sphere to the target point in various different poses only based on the three actual distances sensed by the three distance sensors. Thereby, it does not need to identify the center of the sphere based on images of the sphere captured by the vision sensor, improving the calibration efficiency of the robot system.

**BRIEF DESCRIPTION OF THE DRAWINGS**

The above and other features of the present invention will become more apparent by describing in detail exemplary embodiments thereof with reference to the accompanying drawings, in which:

Fig. 1 is an illustrative view of a robot system according to an exemplary embodiment of the present invention;

Fig. 2 shows a sensor coordinate system for three distance sensors according to an exemplary embodiment of the present invention;

Fig. 3 is an illustrative view of sensing three actual distances from three distance sensors to a surface of the sphere, respectively, by the three distance sensors;

Fig. 4 is an illustrative view showing predetermined distances from three distance sensors to the surface of the sphere when a center of a sphere is accurately moved to a target point; and

Fig. 5 is an illustrative view of controlling the robot to accurately move the center of the sphere to the target point in four different poses.

**DETAILED DESCRIPTION OF PREFERRED EMBODIMENTS OF THE IVENTION**

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art. The scope of the present invention is defined by the appended claims.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

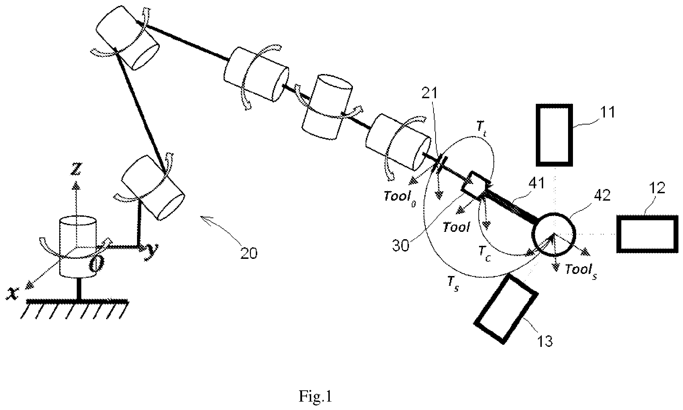

Fig. 1 is an illustrative view of a robot system according to an exemplary embodiment of the present invention.

As shown in Fig.1, the robot system may be constructed as a 6-axis robot system. But the present invention is not limited to this, the robot system may be constructed as any suitable multi-freedom robot system, for example, a four-axis robot system or a five-axis robot system.

As shown in Fig.1, the robot system mainly comprises three distance sensors 11, 12, 13, a 6-axis robot 20, a terminate execution tool (or referred as a terminate effector) 30 mounted on a flange 21 of the robot 20; and a ball-rod member 41, 42 fixed to the terminate execution tool 30.

As shown in Fig.1, the ball-rod member 41, 42 comprises a connection rod 41 and a sphere 42 connected to one end of the connection rod 41. The other end of the connection rod 41 is fixed to the terminate execution tool 30 mounted on the flange 21 of the robot 20.

Geometry parameters of the connection rod 41 and the sphere 42 of the ball-rod member are known and constant. Thereby, after the ball-rod member 41, 42 is fixed to the terminate execution tool 30, a transformation matrix Tc of the center Tool of the terminate execution tool 30 with respect to the center C of the sphere 42 may be pre-obtained. Since the geometry parameters of the connection rod 41 and the sphere 42 of the ball-rod member are known and constant, the transformation matrix Tc also is known and constant.

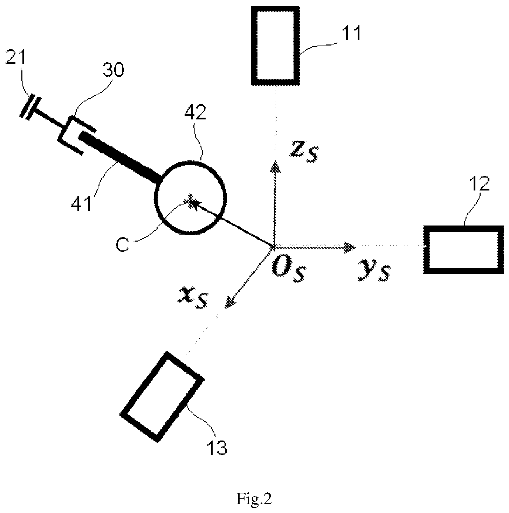

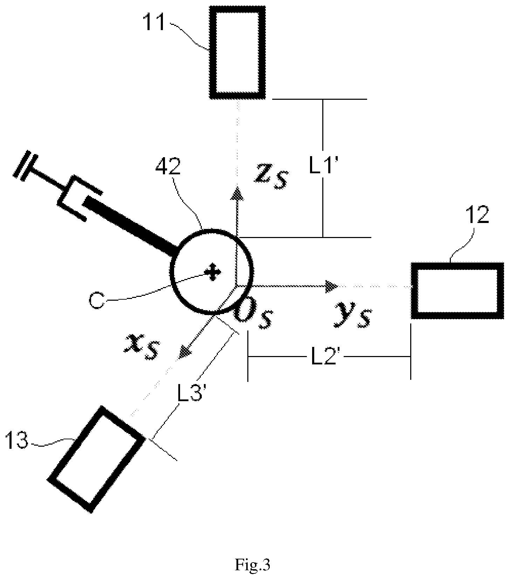

Fig.2 show a sensor coordinate system for three distance sensors 11, 12, 13 according to an exemplary embodiment of the present invention; Fig.3 is an illustrative view of sensing three actual distances from three distance sensors 11, 12, 13 to a surface of the sphere 42, respectively, by the three distance sensors 11, 12, 13 .

As shown in Figs.1-3, three distance sensors 11, 12, 13 are provided around a known target point (for example, the point Os shown in Fig.2), so as to sense three actual distances L1', L2', L3' from the three distance sensors 11, 12, 13 to the surface of the sphere 42, respectively (see Fig.3).

For easy to describe, as shown in Figs.1-3, the three distance sensors 11, 12, 13 are referred as a first distance sensor 11, a second distance sensor 12, and a third distance sensor 13, respectively. As shown in Fig.3, in practice, when the sphere 42 is moved toward the target point Os, a first actual distance L1' from the first distance sensor 11 to the surface of the sphere 42 may be sensed by the first distance sensor 11 in real time, a second actual distance L2' from the second distance sensor 12 to the surface of the sphere 42 may be sensed by the second distance sensor 12 in real time, and a third actual distance L3' from the third distance sensor 13 to the surface of the sphere 42 may be sensed by the third distance sensor 13 in real time. In an embodiment, as shown in Fig.3, the first actual distance L1' is a distance from the first distance sensor 11 to the surface of the sphere 42 in an axial direction of the first distance sensor 11, the second actual distance L2' is a distance from the second distance sensor 12 to the surface of the sphere 42 in an axial direction of the second distance sensor 12, and the third actual distance L3' is a distance from the third distance sensor 13 to the surface of the sphere 42 in an axial direction of the third distance sensor 13.

Although it is not shown, in an embodiment, the robot system may further comprise a controller configured to control the robot system based on a pre-stored program.

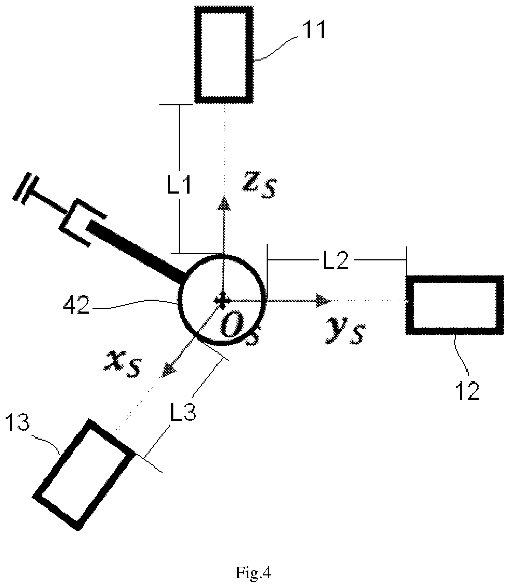

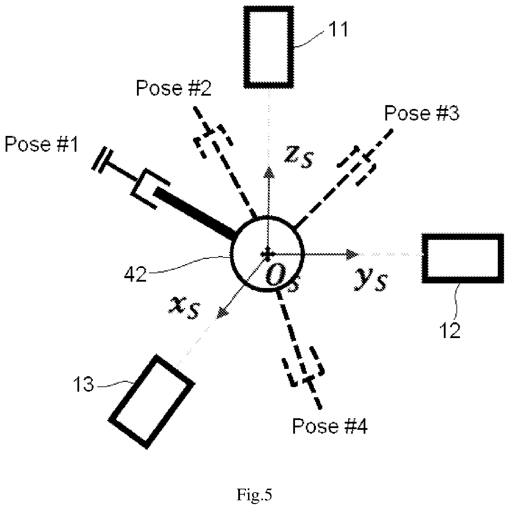

Fig.4 is an illustrative view showing predetermined distances from three distance sensors 11, 12, 13 to the surface of the sphere 42 when a center C of the sphere 42 is accurately moved to a target point Os; and Fig.5 is an illustrative view of controlling the robot 20 to accurately move the center C of the sphere 42 to the target point Os in four different poses Pose#1, Pose#2, Pose#3, Pose#4.

Hereafter, it will describe the automatic calibration method of the robot system with reference to Figs. 1-5. The method mainly comprises steps of:

    S100: providing a ball-rod member 41, 42 comprising a connection rod 41 and a sphere 42 connected to one end of the connection rod 41, as shown in Fig. 1;

    S200: fixing the other end of the connection rod 41 to an terminate execution tool 30 mounted on a flange 21 of a robot 20, as shown in Fig. 1;

    S300: providing three distance sensors 11, 12, 13 around a known target point, so as to sense three actual distances L1', L2', L3' from the three distance sensors 11, 12, 13 to a surface of the sphere 42, respectively;

    S400: controlling the robot 20 to move the center C of the sphere 42 to the target point in various different poses pose#1, pose#2, pose#3, pose#4 based on the three actual distances L1', L2', L3' sensed by the three distance sensors 11, 12, 13, and calculating a transformation matrix Ts of a center C of the sphere 42 with respect to the center $Tool_0$ of the flange 21 based on pose data of the robot 20 at the target point in the various different poses; and

    S500: calculating a transformation matrix Tt of the center Tool of the terminate execution tool 30 with respect to the center $Tool_0$ of the flange 21 according to a following formula 1:

$$Tt = Ts * Tc \qquad\qquad 1,$$

wherein
Tc is a transformation matrix of the center Tool of the terminate execution tool 30 with respect to the center of the sphere 42, and Tc is known and constant.

As shown in Figs.1-5, positions of the first distance sensor 11, the second distance sensor 12, and the third distance sensor 13 are known and constant. Thereby, when the center C of the sphere 42 is accurately moved to the known target point Os, the distance from each of the first distance sensor 11, the second distance sensor 12 and the third distance sensor 13 to the surface of the sphere 42 is also known and constant. For easy to describe, as shown in Fig.4, when the center C of the sphere 42 is accurately moved to the known target point, the first distance sensor 11, the second distance sensor 12 and the third distance sensor 13 are distanced from the surface of the sphere 42 by a first predetermined distance L1, a second predetermined distance L2 and a third predetermined distance L3, respectively. As described above, the first predetermined distance L1 from the first distance sensor 11 to the surface of the sphere 42 in the axial directions of the first distance sensor 11, the second predetermined distance L2 from the second distance sensor 12 to the surface of the sphere 42 in the axial directions of the second distance sensor 12, and the third predetermined distance L3 from the third distance sensor 13 to the surface of the sphere 42 in the axial directions of the third distance sensor 13 are known and constant.

Please be noted that, in an embodiment, the first predetermined distance L1, the second predetermined distance L2 and the third predetermined distance L3 may be equal to or not equal to each other.

In the above step S400, based on a first distance error between a first actual distance L1' sensed by the first distance sensors 11 and the first predetermined distance L1, a second distance error between a second actual distance L2' sensed by the second distance sensors 12 and the second predetermined distance L2, and a third distance error between a third actual distance L3' sensed by the third distance sensors 13 and the third predetermined distance L3, performing a closed-loop feedback control on the robot 20 until the first distance error, the second distance error and the third distance error all become zero. In this way, the center C of the sphere 42 may be accurately moved to the target point Os.

In an alternative embodiment which is not part of the present invention, the above step S400 may comprise steps of: calculating an actual position of the center C of the sphere 42 in a sensor coordinate system $x_s$, $y_s$, $z_s$ based on the three actual distances L1', L2', L3' sensed by the three distance sensors 11, 12, 13; and based on a position error between the actual position of the center C of the sphere 42 in the sensor coordinate system $x_s$, $y_s$, $z_s$ and a target position of the target point in the sensor coordinate system $x_s$, $y_s$, $z_s$, performing a closed-loop feedback control on the robot 20 until the position error becomes zero. In this way, the center C of the sphere 42 may be accurately moved to the target point Os.

Please be noted that, in practice, it is not necessary to calculate the actual position of the center C of the sphere 42 in the sensor coordinate system $x_s$, $y_s$, $z_s$. For example, as described above, a closed-loop feedback control on the robot 20 may be performed until the first actual distance L1' sensed by the first distance sensor 11 is equal to the first predetermined distance L1, the second actual distance L2' sensed by the second distance sensor 12 is equal to the second predetermined distance L2, and the third actual distance L3' sensed by the third distance sensor 13 is equal to the third predetermined distance L3. In this way, the center C of the sphere 42 may be accurately moved to the target point Os.

In an exemplary embodiment of the present invention, for easy to calculation, the axis of the first distance sensor 11, the axis of the second distance sensor 12, and the axis of the third distance sensor 13 intersect at the same one intersection point $O_s$. But the present invention is not limited to this, the axis of the first distance sensor 11, the axis of the second distance sensor 12, and the axis of the third distance sensor 13 may not intersect at the same one point.

In an exemplary embodiment of the present invention, the intersection point $O_s$ of the axis of the first distance sensor 11, the axis of the second distance sensor 12, and the axis of the third distance sensor 13 may be defined as the target point. That is, the intersection point $O_s$ of the axis of the first distance sensor 11, the axis of the second distance sensor 12, and the axis of the third distance sensor 13 may be positioned at the target point. But the present invention is not limited to this, the intersection point $O_s$ may be not positioned at the target point.

In an exemplary embodiment of the present invention, for easy to calculation, the axis of the first distance sensor 11, the axis of the second distance sensor 12, and the axis of the third distance sensor 13 may be orthogonal to each other. But the present invention is not limited to this, the axis of the first distance sensor 11, the axis of the second distance sensor 12, and the axis of the third distance sensor 13 may be not orthogonal to each other.

In an exemplary embodiment of the present invention, for easy to calculation, three axes of the sensor coordinate system $x_s$, $y_s$, $z_s$ are defined by the axis of the first distance sensor 11, the axis of the second distance sensor 12, and the axis of the third distance sensor 13, respectively; an original point of the sensor coordinate system $x_s$, $y_s$, $z_s$ is positioned at the intersection point $O_s$ of the axis of the first distance sensor 11, the axis of the second distance sensor 12, and the axis of the third distance sensor 13.

In an exemplary embodiment of the present invention, as shown in Figs.1-5, the step S400 may mainly comprise steps of:

S410: controlling the robot 20 to move the center C of the sphere 42 to the target point in a first pose pose#1 based on the three actual distances L1', L2', L3' sensed by the three distance sensors 11, 12, 13, and obtaining a first pose data of the robot 20 at the target point;

S420: controlling the robot 20 to move the center C of the sphere 42 to the target point in a second pose pose#2 based on the three actual distances L1', L2', L3' sensed by the three distance sensors 11, 12, 13, and obtaining a second pose data of the robot 20 at the target point;

S430: controlling the robot 20 to move the center C of the sphere 42 to the target point in a third pose pose#3 based on the three actual distances L1', L2', L3' sensed by the three distance sensors 11, 12, 13, and obtaining a third pose data of the robot 20 at the target point;

S440: controlling the robot 20 to move the center C of the sphere 42 to the target point in a fourth pose pose#4 based on the three actual distances L1', L2', L3' sensed by the three distance sensors 11, 12, 13, and obtaining a fourth pose data of the robot 20 at the target point; and

S450: calculating the transformation matrix Ts of the center C of the sphere 42 with respect to the center $Tool_0$ of the flange 21 based on the obtained first pose data, second pose data, third pose data and fourth pose data of the robot 20.

In each of the steps S420, S430 and S440, based on a first distance error between a first actual distance L1' sensed by the first distance sensors 11 and the first predetermined distance L1, a second distance error between a second actual distance L2' sensed by the second distance sensors 12 and the second predetermined distance L2, and a third distance error between a third actual distance L3' sensed by the third distance sensors 13 and the third predetermined distance L3, performing a closed-loop feedback control on the robot 20 until the first distance error, the second distance error and the third distance error all become zero. In this way, the center C of the sphere 42 may be accurately moved to the target point Os.

In an alternative embodiment which is not part of the present invention, each of the steps S420, S430 and S440 may comprise steps: calculating an actual position of the center C of the sphere 42 in a sensor coordinate system $x_s$, $y_s$, $z_s$ based on the three actual distances L1', L2', L3' sensed by the three distance sensors 11, 12, 13; and based on a position error between the actual position of the center C of the sphere 42 in the sensor coordinate system $x_s$, $y_s$, $z_s$ and a target position of the target point in the sensor coordinate system $x_s$, $y_s$, $z_s$, performing a closed-loop feedback control on the robot 20 until the position error becomes zero. In this way, the center C of the sphere 42 may be accurately moved to the target point Os.

In the illustrated embodiments, the center C of the sphere 42 is accurately moved to the same one target point Os by controlling the robot 20 in four different poses pose#1, pose#2, pose#3, pose#4 based on the three actual distances L1', L2', L3' sensed by the three distance sensors 11, 12, 13. But the present invention is not limited to this, the center C of the sphere 42 may be accurately moved to the same one target point Os by controlling the robot 20 in two, three, five or more different poses based on the three actual distances L1', L2', L3' sensed by the three distance sensors 11, 12, 13.

In an exemplary embodiment of the present invention, the three distance sensors 11, 12, 13 each may be, but not limited to, a non-contact distance sensor.

In an exemplary embodiment of the present invention, the three distance sensors 11, 12, 13 each may comprise a laser distance sensor or an ultrasonic distance sensor.

In the above various exemplary embodiments of the present invention, the ball-rod member 41, 42 is fixed to the terminate execution tool 30 mounted on the flange 21 of the robot 20, three distance sensors 11, 12, 13 are provided around the known target point Os. In this way, the center C of the sphere 42 may be accurately moved to the same one target point Os by controlling the robot 20 based on the three actual distances L1', L2', L3' sensed by the three distance sensors 11, 12, 13. Thereby, it does not need to identify the center C of the sphere 42 based on images of the sphere 42 captured by the vision sensor, improving the calibration efficiency of the robot system.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles of the disclosure, the scope of which is defined in the claims.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1.  An automatic calibration method of a robot system, comprising steps of:

S100: providing a ball-rod member (41, 42) comprising a connection rod (41) and a sphere (42) connected to one end of the connection rod (41);

S200: fixing the other end of the connection rod (41) to a terminate execution tool (30) mounted on a flange (21) of a robot (20);

S300: providing a first distance sensor (11), a second distance sensor (12) and a third distance sensor (13) around a known target point, so as to sense three actual distances (L1', L2', L3') from the three distance sensors (11, 12, 13) to a surface of the sphere (42), respectively,

the first distance sensor (11), the second distance sensor (12) and the third distance sensor (13) being distanced from the surface of the sphere (42) by a first predetermined distance (L1), a second predetermined distance (L2) and a third predetermined distance (L3), respectively, when the center (C) of the sphere (42) is accurately moved to the target point;

S400: controlling the robot (20) to move the center (C) of the sphere (42) to the target point in various different poses (pose#1, pose#2, pose#3, pose#4) based on a first distance error between a first actual distance (L1') sensed by the first distance sensor (11) and the first predetermined distance (L1), a second distance error between a second actual distance (L2') sensed by the second distance sensor (12) and the second predetermined distance (L2), and a third distance error between a third actual distance (L3') sensed by the third distance sensor (13) and the third predetermined distance (L3), by performing a closed-loop feedback control on the robot (20) until the first distance error, the second distance error and the third distance error all become zero, and calculating a transformation matrix Ts of the center (C) of the sphere (42) with respect to the center (ToolO) of the flange (21) based on pose data of the robot (20) at the target point in the various different poses; and

S500: calculating a transformation matrix Tt of the center (Tool) of the terminate execution tool (30) with respect to the center (ToolO) of the flange (21) according to a following formula (1):

$$Tt = Ts * Tc \qquad (1),$$

wherein
Tc is a transformation matrix of the center (Tool) of the terminate execution tool (30) with respect to the center of the sphere (42), and Tc is known and constant.

2. The method according to claim 1,
wherein an axis of the first distance sensor (11), an axis of the second distance sensor (12), and an axis of the third distance sensor (13) intersect at the same one intersection point (Os).

3. The method according to claim 2,
wherein the intersection point (Os) of the axis of the first distance sensor (11), the axis of the second distance sensor (12), and the axis of the third distance sensor (13) is defined as the target point.

4. The method according to claim 3,
wherein the axis of the first distance sensor (11), the axis of the second distance sensor (12), and the axis of the third distance sensor (13) are orthogonal to each other.

5. The method according to claim 4,

wherein three axes of a sensor coordinate system (xs, ys, zs) are defined by the axis of the first distance sensor (11), the axis of the second distance sensor (12), and the axis of the third distance sensor (13), respectively; and
wherein an original point of the sensor coordinate system (xs, ys, zs) is positioned at the intersection point (Os) of the axis of the first distance sensor (11), the axis of the second distance sensor (12), and the axis of the third distance sensor (13).

6. The method according to claim 1, wherein
in the step S400, controlling the robot (20) to accurately move the center (C) of the sphere (42) to the target point in at least two different poses (pose#1, pose#2, pose#3, pose#4).

7. The method according to claim 1, wherein the step S400 comprises steps of:

S410: controlling the robot (20) to move the center (C) of the sphere (42) to the target point in a first pose (pose#1) based on the first to third distance errors, by performing a closed-loop feedback control on the robot (20) until the first to third distance errors all become zero, and obtaining a first pose data of the robot (20) at the target point;

S420: controlling the robot (20) to move the center (C) of the sphere (42) to the target point in a second pose (pose#2) based on the first to third distance errors, by performing a closed-loop feedback control on the robot (20) until the first to third distance errors all become zero, and obtaining a second pose data of the robot (20) at the target point;

S430: controlling the robot (20) to move the center (C) of the sphere (42) to the target point in a third pose (pose#3) based on the first to third distance errors, by performing a closed-loop feedback control on the robot (20) until the first to third distance errors all become zero, and obtaining a third pose data of the robot (20) at the target point;

S440: controlling the robot (20) to move the center (C) of the sphere (42) to the target point in a fourth pose (pose#4) based on the first to third distance errors, by performing a closed-loop feedback control on the robot (20) until the first to third distance errors all become zero, and obtaining a fourth pose data of the robot (20) at the target point; and

S450: calculating the transformation matrix Ts of the center (C) of the sphere (42) with respect to the center (ToolO) of the flange (21) based on the obtained first pose data, second pose data, third pose data and fourth pose data of the robot (20).

8. The method according to claim 1, wherein the robot (20) comprises a multi axis robot.

9. The method according to claim 1, wherein the three distance sensors (11, 12, 13) each is a non-contact distance sensor.

10. The method according to claim 9, wherein the three distance sensors (11, 12, 13) each comprises a laser distance sensor or an ultrasonic distance sensor.

11. A robot system comprising

- a robot (20) with a flange (21);
- a terminate execution tool (30) mounted on the flange (21);
- a ball-rod member (41, 42) comprising a connection rod (41) and a sphere (42) connected to one end of the connection rod (41), wherein the other end of the connection rod (41) is fixable to the terminate execution tool;
- a first distance sensor (11), a second distance sensor (12) and a third distance sensor (13) provided around a known target point, so as to sense three actual distances (L1', L2', L3') from the three distance sensors (11, 12, 13) to a surface of the sphere (42), respectively; and
- a controller configured to control the robot (20) based on a pre-stored program and to perform the steps S400 and S500 of claim 1.

12. The robot system according to claim 11, wherein the controller is configured to perform the steps S410, S420, S430, S440 and S450 of claim 7.

13. The robot system according to claim 11 or 12, wherein the robot (20) comprises a multi axis robot.

14. The robot system according to any one of claims 11 to 13, wherein each of the three distance sensors (11, 12, 13) is a non-contact distance sensor.

15. The robot system according to claim 14, wherein each of the three distance sensors (11, 12, 13) comprises a laser distance sensor or an ultrasonic distance sensor.

**Patentansprüche**

1. Automatisches Kalibrierverfahren eines Robotersystems, umfassend Schritte zum:

S100: Bereitstellen eines Kugelstangenelements (41, 42), umfassend eine Verbindungsstange (41) und eine mit einem Ende der Verbindungsstange (41) verbundene Kugel (42);

S200: Befestigen des anderen Endes der Verbindungsstange (41) an einem an einem Flansch (21) eines Roboters (20) montierten Abschlussausführungswerkzeug (30);

S300: Bereitstellen eines ersten Abstandssensors (11), eines zweiten Abstandssensors (12) und eines dritten Abstandssensors (13) um einen bekannten Zielpunkt, um drei Istabstände (L1', L2', L3') jeweils von den drei Abstandssensoren (11, 12, 13) zu einer Fläche der Kugel zu erfassen (42),

wobei der erste Abstandssensor (11), der zweite Abstandssensor (12) und der dritte Abstandssensor (13) zur Fläche der Kugel (42) jeweils in einem ersten vorbestimmten Abstand (L1), einem zweiten vorbestimmten Abstand (L2) und einem dritten vorbestimmten Abstand (L3) beabstandet ist, wenn die Mitte (C) der Kugel (42) genau zum Zielpunkt bewegt wird;

S400: Steuern des Roboters (20) zum Bewegen der Mitte(C) der Kugel (42) zum Zielpunkt in mehreren verschiedenen Stellungen (Stellung Nr. 1, Stellung Nr. 2, Stellung Nr. 3) auf Basis eines ersten Abstandsfehlers zwischen einem vom ersten Abstandssensor(11) erfassten ersten Istabstand (L1') und dem ersten vorbestimmten Abstand (L1), eines zweiten Abstandsfehlers zwischen einem vom zweiten Abstandssensor (12) erfassten zweiten Istabstand (L2') und dem zweiten vorbestimmten Abstand (L2) und eines dritten Abstandsfehlers zwischen einem vom dritten Abstandssensor (13) erfassten dritten Istabstand (L3') und dem dritten vorbestimmten Abstand (L3) durch Durchführen einer Regelung am Roboter (20), bis der erste Abstandsfehler, der zweite Abstandsfehler und der dritte Abstandsfehler alle gleich Null werden, und Berechnen einer Transformationsmatrix Ts der Mitte (C) der Kugel (42) in Bezug auf die Mitte (ToolO) der Flansches (21) auf Basis von Stellungsdaten des Roboters (20) am Zielpunkt in den mehreren verschiedenen Stellungen; und

S500: Berechnen einer Transformationsmatrix Tt der Mitte (Tool) des Abschlussausführungswerkzeugs (30) in Bezug auf die Mitte (ToolO) des Flansches (21) gemäß einer folgenden Formel (1):

$$Tt = Ts*Tc \quad (1),$$

wobei
Tc eine Transformationsmatrix der Mitte (Tool) des Abschlussausführungswerkzeugs (30) in Bezug auf die Mitte der Kugel (42) ist und Tc bekannt und konstant ist.

2. Verfahren nach Anspruch 1,
wobei sich eine Achse des ersten Abstandssensors (11), eine Achse des zweiten Abstandssensors (12) und eine Achse des dritten Abstandssensors (13) im gleichen Schnittpunkt (Os) schneiden.

3. Verfahren nach Anspruch 2,
wobei der Schnittpunkt (Os) der Achse des ersten Abstandssensors (11), der Achse des zweiten Abstandssensors (12) und der Achse des dritten Abstandssensors (13) als der Zielpunkt definiert ist.

4. Verfahren nach Anspruch 3,
wobei die Achse des ersten Abstandssensors (11), die Achse des zweiten Abstandssensors (12) und die Achse des dritten Abstandssensors (13) orthogonal zueinander sind.

5. Verfahren nach Anspruch 4,

wobei drei Achsen eines Sensorkoordinatensystems (xs, ys, zs) jeweils durch die Achse des ersten Abstandssensors (11), die Achse des zweiten Abstandssensors (12) und die Achse des dritten Abstandssensors (13) definiert sind; und
wobei ein Nullpunkt des Sensorkoordinatensystems (xs, ys, zs) am Schnittpunkt (Os) der Achse des ersten Abstandssensors (11), der Achse des zweiten Abstandssensors (12) und der Achse des dritten Abstandssensors (13) angeordnet ist.

6. Verfahren nach Anspruch 1, wobei
im Schritt S400 ein Steuern des Roboters (20) zum genauen Bewegen der Mitte (C) der Kugel (42) zum Zielpunkt in wenigstens zwei verschiedenen Stellungen (Stellung Nr. 1, Stellung Nr. 2, Stellung Nr. 3, Stellung Nr. 4) erfolgt.

7. Verfahren nach Anspruch 1, wobei der Schritt S400 Schritte umfasst zum:

S410: Steuern des Roboters (20) zum Bewegen der Mitte (C) der Kugel (42) zum Zielpunkt in einer ersten Stellung (Stellung Nr. 1) auf Basis des ersten bis dritten Abstandsfehlers durch Durchführen einer Regelung am Roboter (20), bis der dritte bis dritte Abstandsfehler alle gleich Null werden, und Ermitteln von ersten Stellungsdaten des Roboters (20) am Zielpunkt;
S420: Steuern des Roboters (20) zum Bewegen der Mitte (C) der Kugel (42) zum Zielpunkt in einer zweiten Stellung (Stellung Nr. 2) auf Basis des ersten bis dritten Abstandsfehlers durch Durchführen einer Regelung am Roboter (20), bis der dritte bis dritte Abstandsfehler alle gleich Null werden, und Ermitteln von zweiten Stellungsdaten des Roboters (20) am Zielpunkt;
S430: Steuern des Roboters (20) zum Bewegen der Mitte (C) der Kugel (42) zum Zielpunkt in einer dritten Stellung (Stellung Nr. 1) auf Basis des ersten bis dritten Abstandsfehlers durch Durchführen einer Regelung am Roboter (20), bis der dritte bis dritte Abstandsfehler alle gleich Null werden, und Ermitteln von dritten Stellungsdaten des Roboters (20) am Zielpunkt;
S440: Steuern des Roboters (20) zum Bewegen der Mitte (C) der Kugel (42) zum Zielpunkt in einer vierten Stellung (Stellung Nr. 4) auf Basis des ersten bis dritten Abstandsfehlers durch Durchführen einer Regelung am Roboter (20), bis der dritte bis dritte Abstandsfehler alle gleich Null werden, und Ermitteln von vierten Stellungsdaten des Roboters (20) am Zielpunkt; und
S450: Berechnen der Transformationsmatrix Ts der Mitte (C) der Kugel (42) in Bezug auf die Mitte (ToolO) des Flansches (21) auf Basis der ermittelten ersten Stellungsdaten, zweiten Stellungsdaten, dritten Stellungsdaten und vierten Stellungsdaten des Roboters (20).

8. Verfahren nach Anspruch 1, wobei der Roboter (20) einen Mehrachsroboter umfasst.

9. Verfahren nach Anspruch 1, wobei die drei Abstandssensoren (11, 12, 13) jeweils Näherungsabstandssensoren sind.

10. Verfahren nach Anspruch 9, wobei die drei Abstandssensoren (11, 12, 13) jeweils einen Laserabstandssensor oder einen Ultraschallabstandssensor umfassen.

11. Robotersystem, umfassend

- einen Roboter (20) mit einem Flansch (21);
- ein am Flansch (21) montiertes Abschlussausführungswerkzeug (30);

- ein Kugelstangenelement (41, 42), umfassend eine Verbindungsstange (41) und eine mit einem Ende der Verbindungsstange (41) verbundene Kugel (42), wobei das andere Ende der Verbindungsstange (41) am Abschlussausführungswerkzeug befestigbar ist;

- einen ersten Abstandssensor (11), einen zweiten Abstandssensor (12) und einen dritten Abstandssensor (13), angeordnet um einen bekannten Zielpunkt, um drei Istabstände (L1', L2', L3') jeweils von den drei Abstandssensoren (11, 12, 13) zu einer Fläche der Kugel zu erfassen (42); und

- ein Steuergerät, ausgebildet zum Steuern des Roboters (20) auf Basis eines vorab gespeicherten Programms und zum Ausführen der Schritte S400 und S500 von Anspruch 1.

12. Robotersystem nach Anspruch 11, wobei das Steuergerät zum Ausführen der Schritte S410, S420, S430, S440 und S450 von Anspruch 7 ausgebildet ist.

13. Robotersystem nach Anspruch 11 oder 12, wobei der Roboter (20) einen Mehrachsroboter umfasst.

14. Robotersystem nach einem der Ansprüche 11 bis 13, wobei jeder der drei Abstandssensoren (11, 12, 13) ein Näherungsabstandssensor ist.

15. Robotersystem nach Anspruch 14, wobei jeder drei Abstandssensoren (11, 12, 13) einen Laserabstandssensor oder einen Ultraschallabstandssensor umfasst.

**Revendications**

1. Procédé d'étalonnage automatique d'un système robotique, comprenant les étapes consistant à :

S100 : fournir un élément de tige à bille (41, 42) comprenant une tige de connexion (41) et une sphère (42) reliée à une extrémité de la tige de connexion (41) ;
S200 : fixer l'autre extrémité de la tige de connexion (41) à un outil d'exécution de la terminaison (30) monté sur une bride (21) d'un robot (20) ;
S300 : fournir un premier capteur de distance (11), un deuxième capteur de distance (12) et un troisième capteur de distance (13) autour d'un point cible connu, de manière à mesurer trois distances réelles (L1', L2', L3') entre les trois capteurs de distance (11, 12, 13) et la surface de la sphère (42), respectivement, le premier capteur de distance (11), le deuxième capteur de distance (12) et le troisième capteur de distance (13) sont éloignés de la surface de la sphère (42) d'une première distance prédéterminée (L1), d'une deuxième distance prédéterminée (L2) et d'une troisième distance prédéterminée (L3), respectivement, lorsque le centre (C) de la sphère (42) est déplacé avec précision vers le point cible ;
S400 : commander le robot (20) pour déplacer le centre (C) de la sphère (42) vers le point cible dans différentes poses (pose#1, pose#2, pose#3, pose#4) sur la base d'une première erreur de distance entre une première distance réelle (L1') détectée par le premier capteur de distance (11) et la première distance prédéterminée (L1), d'une deuxième erreur de distance entre une deuxième distance réelle (L2') détectée par le deuxième capteur de distance (12) et la deuxième distance prédéterminée (L2), et d'une troisième erreur de distance entre une troisième distance réelle (L3') détectée par le troisième capteur de distance (13) et la troisième distance prédéterminée (L3), en effectuant une commande de rétroaction en boucle fermée sur le robot (20) jusqu'à ce que la première erreur de distance, la deuxième erreur de distance et la troisième erreur de distance deviennent toutes nulles, et en calculant une matrice de transformation Ts du centre (C) de la sphère (42) par rapport au centre (ToolO) de la bride (21) sur la base des données de pose du robot (20) au point cible dans les diverses poses différentes ; et
S500 : calculer une matrice de transformation Tt du centre (Tool) de l'outil d'exécution de la terminaison (30) par rapport au centre (ToolO) de la bride (21) selon la formule suivante (1) :

$$Tt = Ts * Tc \quad (1),$$

où
Tc est une matrice de transformation du centre (Tool) de l'outil d'exécution de la terminaison (30) par rapport au centre de la sphère (42), et Tc est connu et constant.

2. Procédé selon la revendication 1,
dans lequel un axe du premier capteur de distance (11), un axe du deuxième capteur de distance (12) et un axe du troisième capteur de distance (13) se croisent au même point d'intersection (Os).

3. Procédé selon la revendication 2,
dans lequel le point d'intersection (Os) de l'axe du premier capteur de distance (11), de l'axe du deuxième capteur de distance (12) et de l'axe du troisième capteur de distance (13) est défini comme le point cible.

**4.** Procédé selon la revendication 3,
dans lequel l'axe du premier capteur de distance (11), l'axe du deuxième capteur de distance (12) et l'axe du troisième capteur de distance (13) sont orthogonaux l'un par rapport à l'autre.

**5.** Procédé selon la revendication 4,

dans lequel trois axes du système de coordonnées du capteur (xs, ys, zs) sont définis par l'axe du premier capteur de distance (11), l'axe du deuxième capteur de distance (12) et l'axe du troisième capteur de distance (13), respectivement ; et
dans lequel un point original du système de coordonnées du capteur (xs, ys, zs) est positionné au point d'intersection (Os) de l'axe du premier capteur de distance (11), de l'axe du deuxième capteur de distance (12) et de l'axe du troisième capteur de distance (13).

**6.** Procédé selon la revendication 1, dans lequel à l'étape S400, commander le robot (20) pour déplacer avec précision le centre (C) de la sphère (42) vers le point cible dans au moins deux poses différentes (pose#1, pose#2, pose#3, pose#4).

**7.** Procédé selon la revendication 1, dans lequel l'étape S400 comprend les étapes consistant à :

S410 : commander le robot (20) pour déplacer le centre (C) de la sphère (42) vers le point cible dans une première pose (pose#1) sur la base des première à troisième erreurs de distance, en effectuant une commande de rétroaction en boucle fermée sur le robot (20) jusqu'à ce que les première à troisième erreurs de distance deviennent toutes nulles, et en obtenant une première donnée de pose du robot (20) au point cible ;
S420 : commander le robot (20) pour déplacer le centre (C) de la sphère (42) vers le point cible dans une deuxième pose (pose#2) sur la base des première à troisième erreurs de distance, en effectuant une commande de rétroaction en boucle fermée sur le robot (20) jusqu'à ce que les première à troisième erreurs de distance deviennent toutes nulles, et en obtenir une deuxième donnée de pose du robot (20) au point cible ;
S430 : commander le robot (20) pour déplacer le centre (C) de la sphère (42) vers le point cible dans une troisième pose (pose#3) sur la base des première à troisième erreurs de distance, en effectuant une commande de rétroaction en boucle fermée sur le robot (20) jusqu'à ce que les première à troisième erreurs de distance deviennent toutes nulles, et en obtenant une troisième donnée de pose du robot (20) au point cible ;
S440 : commander le robot (20) pour déplacer le centre (C) de la sphère (42) vers le point cible dans une quatrième pose (pose#4) sur la base des première à troisième erreurs de distance, en effectuant une commande de rétroaction en boucle fermée sur le robot (20) jusqu'à ce que les première à troisième erreurs de distance deviennent toutes nulles, et obtenir une quatrième donnée de pose du robot (20) au point cible ; et
S450 : calculer la matrice de transformation Ts du centre (C) de la sphère (42) par rapport au centre (ToolO) de la bride (21) sur la base des premières données de pose, des deuxièmes données de pose, des troisièmes données de pose et des quatrièmes données de pose obtenues du robot (20).

**8.** Procédé selon la revendication 1, dans lequel le robot (20) comprend un robot à plusieurs axes.

**9.** Procédé selon la revendication 1, dans lequel les trois capteurs de distance (11, 12, 13) sont chacun un capteur de distance sans contact.

**10.** Procédé selon la revendication 9, dans lequel les trois capteurs de distance (11, 12, 13) comprennent chacun un capteur de distance laser ou un capteur de distance ultrasonique.

**11.** Système robotique comprenant

- un robot (20) avec une bride (21) ;
- un outil d'exécution de la terminaison (30) monté sur la bride (21) ;
- un élément de tige à bille (41, 42) comprenant une tige de connexion (41) et une sphère (42) reliée à une extrémité de la tige de connexion (41), dans lequel l'autre extrémité de la tige de connexion (41) peut être fixée à l'outil d'exécution de la terminaison ;
- un premier capteur de distance (11), un deuxième capteur de distance (12) et un troisième capteur de distance (13) placés autour d'un point cible connu, de manière à détecter trois distances réelles (L1', L2', L3') entre les trois capteurs de distance (11, 12, 13) et la surface de la sphère (42), respectivement ; et
- un contrôleur configuré pour commander le robot (20) sur la base d'un programme préenregistré et pour exécuter les étapes S400 et S500 selon la revendication 1.

**12.** Système robotique selon la revendication 11, dans lequel le contrôleur est configuré pour exécuter les étapes S410, S420, S430, S440 et S450 selon la revendication 7.

**13.** Système robotique selon la revendication 11 ou 12, dans lequel le robot (20) comprend un robot à plusieurs axes.

**14.** Système robotique selon l'une quelconque des revendications 11 à 13, dans lequel chacun des trois capteurs de distance (11, 12, 13) est un capteur de distance sans contact.

**15.** Système robotique selon la revendication 14, dans lequel chacun des trois capteurs de distance (11, 12, 13) comprend un capteur de distance laser ou un capteur de distance ultrasonique.

Fig.1

Fig.2

Fig.3

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610163828
- WO 2015121767 A1
- WO 03035333 A2